# EUROPÄISCHE PATENTANMELDUNG

(11) **EP 1 873 680 A1**
(43) Veröffentlichungstag der Anmeldung: **02.01.2008**
(21) Anmeldenummer: 06012915.2
(22) Anmeldetag: 23.06.2006
(51) Int. Cl.: G06K 7/00

(54) **Manipulationsgeschützter Kartenleser**

(71) Anmelder: ddm hopt + schuler GmbH & Co. KG., 78628 Rottweil (DE)
(72) Erfinder: Hopt, Jürgen, D-78628 Rottweil (DE); Storz, Michael, D-78073 Bad Dürrheim (DE)
(74) Vertreter: Kohler Schmid Möbus

(57) **Zusammenfassung**

Bei einem Kartenleser (1) mit einer Kontaktiereinheit (2) für eine durch eine Karteneinführöffnung (5) eingeführte Karte (3) ist erfindungsgemäß vorgesehen, dass die Kontaktiereinheit (2) in einer an der Karteneinführöffnung (5) offenen Tasche (6) angeordnet ist, die eine feinmaschige Leiterbahnstruktur mit mindestens einer durchgehenden Leiterbahn (9) aufweist und die mittels einander überlappender Abschnitte aus mindestens einer Leiterbahnfolie (7) gebildet ist, dass die einander überlappenden Abschnitte Leiterbahnenden aufweisen, die miteinander zu der durchgehenden Leiterbahn (9) elektrisch leitend verbunden sind, und dass eine den Boden (8) des Kartenlesers (1) bildende Taschenseite eine Aussparung (10) zum Kontaktieren der Kontaktiereinheit (2) aufweist.

## Beschreibung

Die vorliegende Erfindung betrifft einen Kartenleser, insbesondere Chipkartenleser, mit einer Kontaktiereinheit für eine durch eine Karteneinführöffnung eingeführte Karte.

Bei bekannten Kartenlesern dieser Art kann der Datenaustausch mit einer Karte durch Kontaktieren der elektrischen Kontakte der Kontaktiereinheit manipuliert werden.

Die Aufgabe der vorliegenden Erfindung ist es, einen Kartenleser der eingangs genannten Art vor solchen Manipulationen zu schützen, d.h., einen "sicheren Kartenleser" bereitzustellen.

Diese Aufgabe wird erfindungsgemäß dadurch gelöst, dass die Kontaktiereinheit in einer an der Karteneinführöffnung offenen Tasche angeordnet ist, die eine feinmaschige Leiterbahnstruktur mit mindestens einer durchgehenden Leiterbahn aufweist und die mittels einander überlappender Abschnitte aus mindestens einer Leiterbahnfolie gebildet ist, dass die einander überlappenden Abschnitte Leiterbahnenden aufweisen, die miteinander zu der durchgehenden Leiterbahn elektrisch leitend verbunden sind, und dass eine den Boden des Kartenlesers bildende Taschenseite eine Aussparung zum Kontaktieren der Kontaktiereinheit aufweist.

Der Kartenleser wird mit seinen Anschlusskontakten an einen entsprechenden Stecker einer Kundenleiterplatte angeschlossen und dann auf der Kundenleiterplatte befestigt, wobei gleichzeitig eine elektrische Verbindung zwischen jeder durchgehenden Leiterbahn der Tasche und der Kundenleiterplatte hergestellt wird. Die Anschlusskontakte des Kartenlesers befinden sich innerhalb der durch die Kundenleiterplatte abgedeckten Bodenaussparung der Tasche und sind somit von außen nicht zugänglich. Wenn die Tasche entfernt oder z.B. durch Bohren zerstört wird, werden eine oder beide durchgehenden Leiterbahnen, über die im Betrieb ein Strom fließt, durchtrennt. Dies wird von einer Steuereinheit der Kundenleiterplatte erkannt, die dann keinen Lesevorgang mehr zulässt bzw. die Kontaktiereinheit außer Funktion setzt. Eine unbemerkte Manipulation an der Kontaktiereinheit ist somit nicht möglich, so dass ein "manipulationssicherer" Kartenleser ermöglicht wird

Die Erfindung betrifft auch einen einteiligen Leiterbahnenfolienzuschnitt für die Tasche des oben beschriebenen Kartenlesers, wobei der Zuschnitt einen die Oberseite der Tasche bildenden Deckenabschnitt, mindestens einen den Boden der Tasche bildenden Bodenabschnitt mit einer Aussparung und Seitenwandabschnitte aufweist, wobei zumindest der Deckenabschnitt und die Seitenwandabschnitte eine feinstmaschige Leiterbahnstruktur mit mehreren offenen Leiterbahnzügen aufweisen, die in freiliegenden Kontaktflächen der Abschnitte, welche im aufgerichteten Zustand der Tasche paarweise einander anliegen, und in freiliegenden Kontaktflächen des Bodenabschnitts enden.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: den erfindungsgemäßen Kartenleser mit einer Kontaktiereinheit, die in einer Tasche angeordnet ist, in einer perspektivischen Ansicht von unten;
- Fig. 2: die Draufsicht auf den Boden des in Fig. 1 gezeigten Kartenlesers; und
- Fign. 3a, 3b: die Außen- und Innenseite eines Leiterbahnenfolienzuschnitts, aus dem die in Fig. 1 gezeigte Tasche gefaltet ist.

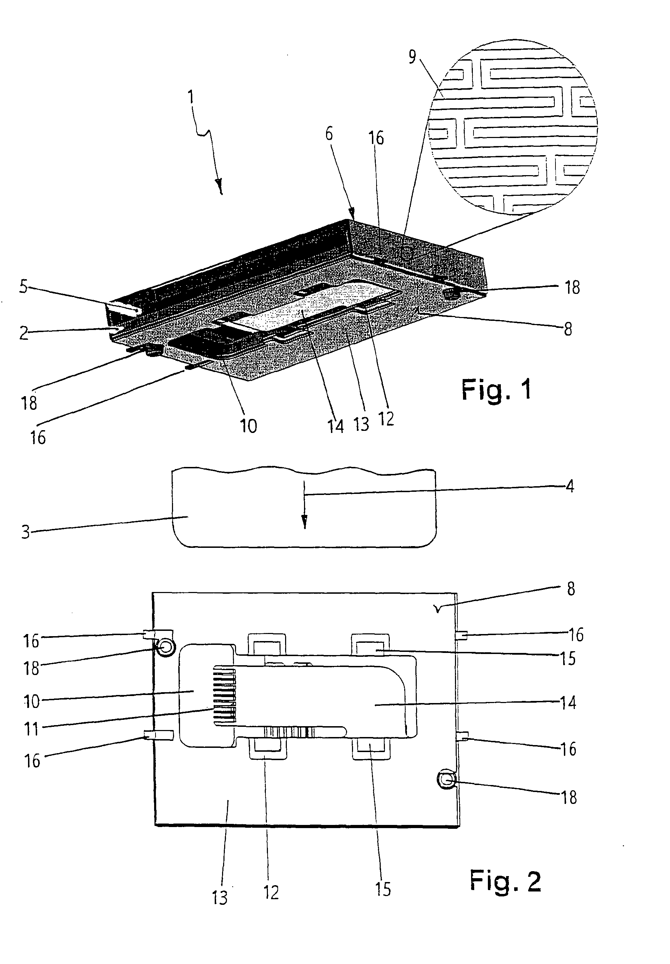

Der in **Fign. 1** und **2** gezeigte Chipkartenleser **1** weist eine Kontaktiereinheit 2 mit acht elektrischen Kontaktfedern (nicht gezeigt) auf, um elektrische Kontaktfelder einer in die Kontaktiereinheit 2 eingeführten Chipkarte **3** zu kontaktieren. Die Chipkarte 3 trägt zum Speichern von Daten einen Mikrochip (nicht gezeigt), dessen Kontakte als elektrische Kontaktfelder (nicht gezeigt) auf der Kartenoberfläche vorgesehen sind. Die Chipkarte 3 wird durch den Benutzer in Einführrichtung **4** über eine Karteneinführöffnung **5** bis in ihre Datenaustauschposition in die Kontaktiereinheit 2 eingeführt und nach dem Datenaustausch vom Benutzer wieder aus der Kontaktiereinheit 2 herausgezogen (so genannter Push/Pull-Kartenleser).

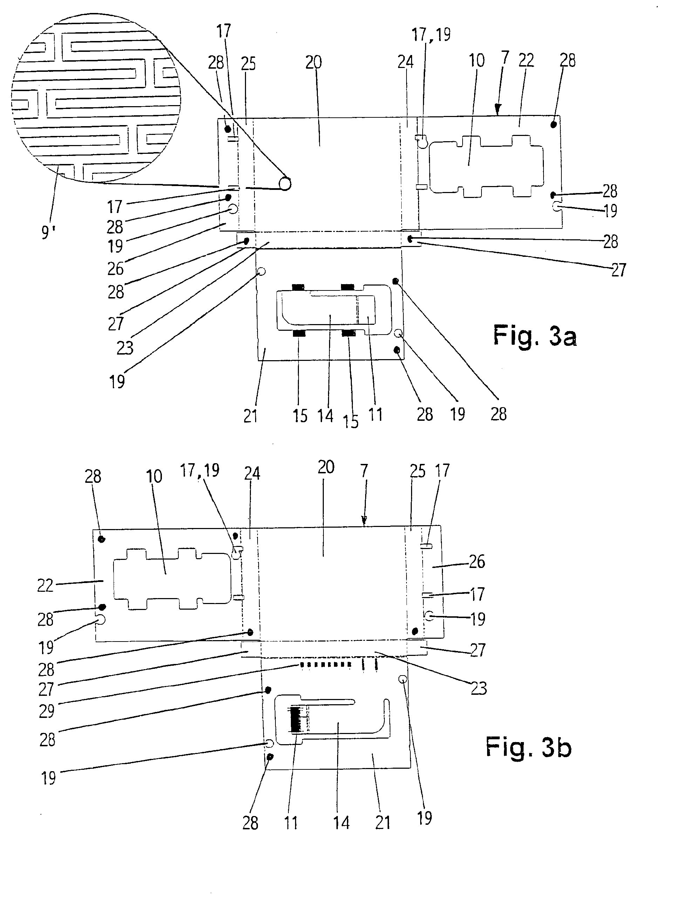

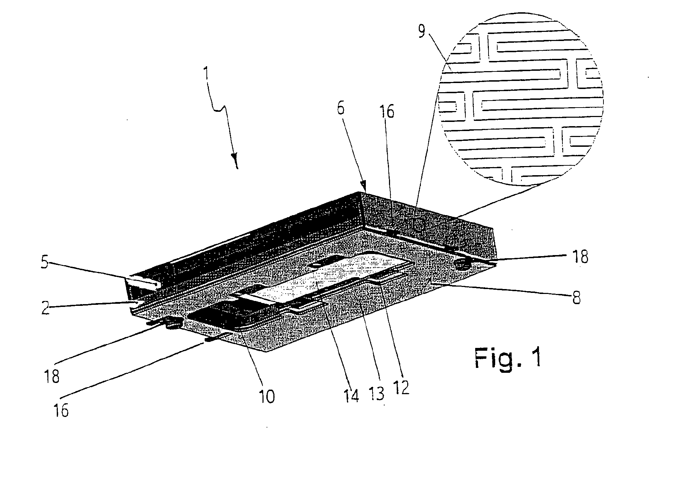

Um die Kontaktiereinheit 2 vor Manipulation zu schützen, ist die Kontaktiereinheit 2 in einer an der Karteneinführöffnung 5 offenen (Bohrschutz)Tasche **6** angeordnet, die, wie unten mit Bezug auf Fig. 3 beschrieben ist, aus einem einzigen Leiterbahnenfolienzuschnitt **7** gefaltet ist. Mit Ausnahme der den Boden **8** des Kartenlesers 1 bildenden unteren Taschenseite weist die Umfangsfläche der Tasche 6 eine feinmaschige mäanderförmige Leiterbahnstruktur mit zwei durchgehenden Leiterbahnen **9** auf. Der Boden 8 weist eine Aussparung **10** auf, innerhalb der die Anschlusskontakte **11** des Kartenlesers 1 vorgesehen sind. Im gezeigten Ausführungsbeispiel ist die untere Taschenseite doppellagig mit einer inneren und einer äußeren Bodenlage **12, 13** gebildet, wobei nur die äußere Bodenlage 13 die Aussparung 10 aufweist. Die innere Bodenlage 12 weist innerhalb der Aussparung 10 einen Leiterbahnstreifen **14** auf, an dessen freiem flexiblen Ende ein Stecker mit den Anschlusskontakten 11 vorgesehen ist. Außerdem weist die innere Bodenlage 12 innerhalb der Aussparung 10 zu beiden Seiten des Leiterbahnstreifens 14 vier freiliegende Kontaktflächen (Lötpads) **15** auf, die - z.B. mittels eines elektrisch leitenden Gummis - einen elektrischen Kontakt zwischen einer Kundenleiterplatte (nicht gezeigt) und dem darauf angeordneten Kartenleser 1 herstellen. Die Befestigung des Kartenlesers 1 auf der Kundenleiterplatte erfolgt mithilfe von vier Kontaktbeinen (Lötpads) 16 der Kontaktiereinheit 2, die durch entsprechende Löcher **17** (Fig. 3) der Tasche 6 vorstehen und in SMD-Technik auf der Kundenleiterplatte festgelötet werden. An zwei diagonal gegenüberliegenden Stellen weist die Kontaktiereinheit 2 bodenseitig zwei Stifte **18** auf, die durch entsprechende Löcher **19** (Fig. 3) der Tasche 6 hindurchgreifen und so die Tasche 6 an der Kontaktiereinheit 2 positionieren.

**Fign. 3a** und **3b** zeigen den Leiterbahnenfolienzuschnitt 7, aus dem die Tasche 6 um die Kontaktiereinheit 2 herum gefaltet wird. Der Zuschnitt 7 weist einen die Oberseite der Tasche bildenden Deckenabschnitt **20,** einen die innere Bodenlage 12 bildenden ersten Bodenabschnitt **21** und einen die äußere Bodenlage 13 bildenden zweiten Bodenabschnitt **22** auf, wobei die beiden Bodenabschnitte 21, 22 jeweils über Seitenwandabschnitt **23, 24** mit dem Deckenabschnitt 20 verbunden sind. Der Deckenabschnitt 20 ist an seiner dem zweiten Bodenabschnitt 22 gegenüberliegenden Seite über einen Seitenwandabschnitt **25** mit einem Deckenteilabschnitt **26** verbunden. An der Seitenwand 23 sind beidseitig noch Laschenabschnitte **27** vorgesehen. Die miteinander verbundenen Abschnitte können aufgrund ihrer Flexibilität an den strichpunktiert angedeuteten Falzlinien umgebogen werden. Die Löcher 17 für die Kontaktbeine 16 der Kontaktiereinheit 2 sind in den Abschnitten 22, 26 und die Löcher 19 für die Stifte 18 der Kontaktiereinheit 2 in den Abschnitten 21, 22, 26 vorgesehen. Der Leiterbahnenfolienzuschnitt 7 weist vollflächig eine oberseitige und eine unterseitige Leiterbahnstruktur mit mehreren offenen Leiterbahnzügen **9'** auf, die mit Ausnahme der beiden Bodenabschnitte 21, 22 mäanderförmig mit minimalem Abstand ausgebildet sind. Die offenen Leiterbahnzüge 9' enden in den freiliegenden Kontaktflächen 15 des ersten Bodenabschnitts 21 und in den mit **28** bezeichneten freiliegenden Kontaktflächen der Abschnitte 21, 22, 24, 25, 26, 27. Für eine Verbindung mit den acht Kontaktfedern der Kontaktiereinheit 2 und einem Endschalter (nicht gezeigt) sind im ersten Bodenabschnitt 21 zehn Anschlüsse (Lötpads) **29** vorgesehen, die mit den Anschlusskontakten 11 über die Leiterbahnen des Leiterbahnstreifens 14 verbunden sind. Die beiden Bodenabschnitte 21, 22 weisen eine größere Dicke als die flexiblen Abschnitten 23 bis 27 auf und können als starre Leiterplatten ausgebildet sein.

Der Leiterbahnenfolienzuschnitt 7 wird wie folgt zu der Tasche 6 aufgerichtet:
Die Kontaktiereinheit 2 wird auf die in Fig. 3b gezeigte Innenseite des ersten Bodenabschnitts 21 aufgelegt und mit dessen Anschlüssen 29 verlötet. Danach werden nacheinander der Deckenabschnitt 20, die Laschenabschnitte 27, der Deckenteilabschnitt 26 und abschließend der zweite Bodenabschnitt 22 jeweils zur Kontaktiereinheit 2 hin umgebogen, wodurch jeweils zwei Kontaktflächen 28 zweier sich überlappender Abschnitte 21/22, 22/26, 24/27 und 25/27 zur gegenseitigen Anlage kommen. Über einen zuvor aufgebrachten elektrisch leitenden Klebstoff sind die aneinander anliegenden Kontaktflächen 28 miteinander elektrisch verbunden, so dass sich innen- und außenseitig jeweils eine durchgehende Leiterbahn 7 ergibt, durch die jeweils zwei der Kontaktflächen 15 miteinander verbunden sind.

Der Kartenleser 1 wird mit seinen Anschlusskontakten 11 an einen entsprechenden Stecker (z.B. Molexstecker) der Kundenleiterplatte angeschlossen und dann mithilfe der Kontaktbeine 16 auf der Kundenleiterplatte befestigt, wobei gleichzeitig eine elektrische Verbindung zwischen den Kontaktflächen 15 und entsprechenden Gegenkontakten der Kundenleiterplatte, z.B. mittels eines dazwischen liegenden elektrisch leitenden Gummis, hergestellt wird. Die Gegenkontakte sind an eine Steuereinheit (nicht gezeigt) der Kundenleiterplatte angeschlossen. Die Anschlusskontakte 11 des Kartenlesers 1 und der Stecker der Kundenleiterplatte sind beide in der Aufnahme 10 des Kartenlesers 1, die durch die Kundenleiterplatte abgedeckt ist, vollständig aufgenommen und somit von außen nicht zugänglich. Die äußere Bodenlage 13 bzw. der zweite Bodenabschnitt 22 sorgt für eine ausreichende Dicke des Bodens 8, damit Anschlusskontakte 11 und Stecker innerhalb der Aussparung 10 vollständig aufgenommen sind.

Wenn die Tasche 6 entfernt oder z.B. durch Bohren zerstört wird, werden eine oder beide durchgehenden Leiterbahnen 9, über die im Betrieb ein Strom fließt, durchtrennt. Dies wird von der Steuereinheit der Kundenleiterplatte erkannt, die dann keinen Lesevorgang mehr zulässt bzw. die Kontaktiereinheit 2 außer Funktion setzt. Gleiches gilt, wenn durch Entfernen der Kontaktiereinheit 2 von der Kundenleiterplatte der Stromkreis zwischen den Kontaktflächen 15 unterbrochen wird. Eine unbemerkte Manipulation an der Kontaktiereinheit 2 ist somit nicht möglich, so dass ein "manipulationssicherer" Kartenleser ermöglicht wird.

## Patentansprüche

1. Kartenleser (1) mit einer Kontaktiereinheit (2) für eine durch eine Karteneinführöffnung (5) eingeführte Karte (3),
**dadurch gekennzeichnet,**
**dass** die Kontaktiereinheit (2) in einer an der Karteneinführöffnung (5) offenen Tasche (6) angeordnet ist, die eine feinmaschige Leiterbahnstruktur mit mindestens einer durchgehenden Leiterbahn (9) aufweist und die mittels einander überlappender Abschnitte (21, 22; 22, 26; 24, 27; 25, 27) aus mindestens einer Leiterbahnfolie (7) gebildet ist, dass die einander überlappenden Abschnitte (21, 22; 22, 26; 24, 27; 25, 27) Leiterbahnenden aufweisen, die miteinander zu der durchgehenden Leiterbahn (9) elektrisch leitend verbunden sind, und dass eine den Boden (8) des Kartenlesers (1) bildende Taschenseite eine Aussparung (10) zum Kontaktieren der Kontaktiereinheit (2) aufweist.

2. Kartenleser nach Anspruch 1, **dadurch gekennzeichnet, dass** die Leiterbahnenden der einander überlappenden Abschnitte (21, 22; 22, 26; 24, 27; 25, 27) als freiliegende Kontaktflächen ausgebildet sind, die miteinander elektrisch verbunden, insbesondere verklebt sind.

3. Kartenleser nach Anspruch 1 oder 2, **dadurch gekennzeichnet, dass** der Boden (8) des Kartenlesers (1) freiliegende Kontaktflächen (15) aufweist, in denen die durchgehende Leiterbahn (7) jeweils endet.

4. Kartenleser nach einem der vorhergehenden Ansprüche, **dadurch gekennzeichnet, dass** Anschlusskontakte (11) der Kontaktiereinheit (2) innerhalb der Aussparung (10) vorgesehen sind.

5. Kartenleser nach einem der vorhergehenden Ansprüche, **dadurch gekennzeichnet, dass** der Boden (8) doppellagig mit einer inneren und einer äußeren Bodenlage (12, 13) gebildet ist, wobei die Aussparung (10) in der äußeren Bodenlage (13) und Anschlusskontakte (11) der Kontaktiereinheit (2) an der inneren Bodenlage (12) vorgesehen sind.

6. Kartenleser nach einem der vorhergehenden Ansprüche, **dadurch gekennzeichnet, dass** der Boden (9) eine größere Dicke als die anderen Taschenseiten aufweist.

7. Kartenleser nach einem der vorhergehenden Ansprüche, **dadurch gekennzeichnet, dass** Kontaktbeine (18) der Kontaktiereinheit (2) durch Löcher (17) der Tasche (6) nach außen vorstehen.

8. Kartenleser nach einem der vorhergehenden Ansprüche, **dadurch gekennzeichnet, dass** die Kontaktiereinheit (2) Stifte (18) aufweist, die in entsprechende Löcher (19) der Tasche (6) greifen.

9. Einteiliger Leiterbahnenfolienzuschnitt (7) für eine Tasche (6) des Kartenlesers (1) nach einem der vorhergehenden Ansprüche, mit einem die Oberseite der Tasche (6) bildenden Deckenabschnitt (20), mit mindestens einem den Boden (8) der Tasche (6) bildenden Bodenabschnitt (21, 22) mit einer Aussparung (10), mit Seitenwandabschnitten (23, 24, 25), wobei zumindest der Deckenabschnitt (20) und die Seitenwandabschnitte (23, 24, 25) eine feinstmaschige Leiterbahnstruktur mit mehreren offenen Leiterbahnzügen (9') aufweisen, die in freiliegenden Kontaktflächen (28) der Abschnitte (21, 22, 24, 25, 26, 27), welche im aufgerichteten Zustand der Tasche (6) paarweise einander anliegen, und in freiliegenden Kontaktflächen (15) des Bodenabschnitts (21) enden.

10. Zuschnitt nach Anspruch 9, **dadurch gekennzeichnet, dass** der Bodenabschnitt (21, 22) eine größere Dicke als die anderen Abschnitte (23, 24, 25, 26, 27) aufweist.

11. Zuschnitt nach Anspruch 9 oder 10, **gekennzeichnet durch** zwei einen doppellagigen Boden (8) der Tasche (6) bildende Bodenabschnitte (21, 22), wobei der eine Bodenabschnitt (22) die Aussparung (10) und der andere Bodenabschnitt (22) Anschlusskontakte (11) für die Kontaktiereinheit (2) aufweist.
